# FASCICULE DE BREVET EUROPEEN

(11) **EP 3 289 189 B1**
(45) Date de publication et mention de la délivrance du brevet: **28.10.2020**
(21) Numéro de dépôt: 16722309.8
(22) Date de dépôt: 26.04.2016
(51) Int. Cl.: F01D 25/16, F02C 3/10, F02C 7/36

(54) **TURBOMOTEUR ENCASTRABLE DANS UN BOITIER REDUCTEUR**
IN EINEM UNTERSETZUNGSGETRIEBE MONTIERBARES TURBOTRIEBWERK
TURBOSHAFT ENGINE MOUNTABLE IN A REDUCTION GEARBOX

(30) Priorité: 27.04.2015 FR 1553751
(43) Date de publication de la demande: 07.03.2018
(73) Titulaire: Safran Helicopter Engines, 64510 Bordes (FR)
(72) Inventeur: LAFARGUE, Olivier, 77550 Moissy-Cramayel (FR); BROTIER, Sébastien, 77550 Moissy-cramayel (FR); PUERTO, Alphonse, 77550 Moissy-cramayel (FR)
(74) Mandataire: Gevers & Orès
(86) Numéro de dépôt international: PCT/FR2016/050977
(87) Numéro de publication internationale: WO 2016/174341

(56) Documents cités:
- FR-A1- 2 864 157
- FR-A1- 2 961 260
- US-A- 4 813 228
- US-B2- 7 055 303

## Description

### 1. Domaine technique de l'invention

L'invention concerne les turbomoteurs pour aéronef, en particulier les turbomoteurs encastrables dans un boîtier réducteur, tel qu'une boîte de transmission de puissance.

### 2. Arrière-plan technologique

Un turbomoteur comprend de manière connue un générateur de gaz et une turbine montée sur un arbre, dit arbre de puissance, s'étendant le long d'une direction, dite direction longitudinale. Cet arbre de puissance est configuré pour pouvoir être relié mécaniquement à un boitier réducteur. Ce boitier réducteur est par exemple, dans le cas d'un hélicoptère, une boite de transmission de puissance reliée au(x) rotor(s) de l'hélicoptère. Lorsque l'arbre de puissance de la turbine et le boitier réducteur sont mécaniquement couplés, la puissance de l'arbre de puissance est transmise à la boite de transmission de puissance, ce qui permet d'entraîner en rotation le(s) rotor(s) de l'hélicoptère.

L'arbre de puissance de la turbine est pour sa part entrainé en rotation par la turbine qui reçoit les gaz produits par le générateur de gaz et qui les détend, ce qui permet de transformer l'énergie cinétique des gaz reçus en une énergie mécanique récupérée par l'arbre de puissance.

La turbine peut être une turbine libre du générateur de gaz ou une turbine liée au générateur de gaz. Dans tout le texte, l'invention est décrite en lien avec une turbine libre. Cela étant, l'invention s'applique également à un turbomoteur comprenant une turbine liée au générateur de gaz.

L'arbre de puissance comprend donc deux extrémités, une extrémité, dite extrémité de puissance, qui est configurée pour être reliée au boitier réducteur, et une extrémité opposée, dite extrémité libre, qui porte typiquement les pales de la turbine libre. Cette extrémité de puissance est en général rapportée à l'avant du turbomoteur au niveau du boitier réducteur et est donc également désignée par les termes d'extrémité avant. On parle alors de montage avant du turbomoteur sur le boitier réducteur.

Les inventeurs ont cherché à concevoir un turbomoteur qui puisse être facilement monté sur un boîtier réducteur et démonté de ce dernier, par exemple pour des opérations de maintenance. Les inventeurs ont notamment cherché à proposer une solution permettant de relier l'extrémité de puissance de l'arbre de puissance à un boitier réducteur.

L'art antérieur comprend également les documents FR-A1-2961260, US4813228, US7055303 et FR-A1-2864157.

### 3. Objectifs de l'invention

L'invention vise à fournir, dans au moins un mode de réalisation de l'invention, un turbomoteur qui peut être aisément monté sur un boîtier réducteur, tel qu'une boite de transmission de puissance.

L'invention vise aussi à fournir, dans au moins un mode de réalisation de l'invention, un turbomoteur qui concourt à limiter l'encombrement axial de l'ensemble formé du turbomoteur et du boitier lorsque le turbomoteur est monté sur le boitier réducteur.

L'invention vise aussi à fournir, dans au moins un mode de réalisation de l'invention, un turbomoteur qui concourt à limiter la masse de l'ensemble formé du turbomoteur et du boitier lorsque le turbomoteur est monté sur le boitier réducteur.

L'invention vise aussi à fournir, dans au moins un mode de réalisation, un aéronef, en particulier un hélicoptère, équipé d'au moins un turbomoteur selon l'invention.

### 4. Exposé de l'invention

Pour ce faire, l'invention concerne un turbomoteur pour hélicoptère selon les revendications 1 et 2, le turbomoteur comprenant un carter dans lequel est agencé un générateur de gaz et une turbine montée sur un arbre de puissance s'étendant le long d'une direction longitudinale et des moyens d'encastrement réversible dudit arbre de puissance dans un boitier réducteur dans lequel est agencée au moins une roue d'engrenage d'un 1^{er} étage de réduction, lesdits moyens d'encastrement réversible comprenant un pignon présentant un alésage central conformé audit arbre de puissance de manière à ce que ledit pignon puisse être emmanché sur ledit arbre de puissance, ledit pignon présentant en outre une périphérie conformée à ladite roue d'engrenage du 1^{er} étage de sorte qu'il puisse former un pignon menant d'entrée du boitier engrené dans ladite roue d'engrenage, une fois ledit arbre de puissance encastré dans ledit boitier réducteur.

Un turbomoteur selon l'invention est équipé de moyens d'encastrement réversible de l'arbre de puissance dans un boitier réducteur. Ces moyens d'encastrement réversible de l'arbre de puissance dans un boitier réducteur forment un kit d'encastrement du turbomoteur sur un boitier réducteur, c'est-à-dire qu'ils confèrent au turbomoteur auquel ils sont associés, la fonctionnalité de pouvoir être directement encastré sur un boitier réducteur et séparé de ce dernier. Dans tout le texte, on désigne donc ces moyens d'encastrement également par les termes de « kit d'encastrement » pour bien mettre en évidence que les moyens d'encastrement forment la liaison d'encastrement entre le turbomoteur et le boitier réducteur. Un turbomoteur selon l'invention est donc encastrable directement sur un boitier réducteur de telle sorte qu'il peut être aisément relié au boitier réducteur lorsque nécessaire et séparé de ce dernier, par exemple pour des opérations de maintenance sur le turbomoteur. Un tel turbomoteur encastrable selon l'invention est configuré pour pouvoir être directement monté sur le boîtier réducteur et être maintenu par ce boîtier réducteur. L'encastrement du turbomoteur sur le boitier réducteur peut être un encastrement vertical, horizontal ou oblique. Cette fonctionnalité permet un gain de masse important sur la chaine motrice globale de l'aéronef. En particulier, un turbomoteur équipé de moyens d'encastrement permet un déport des paliers de l'arbre de puissance directement dans le boitier réducteur et donc une limitation de la longueur axiale du turbomoteur, ces paliers supportant l'arbre de puissance uniquement lorsque le turbomoteur est encastré dans le boitier réducteur. Le kit d'encastrement formé par les moyens d'encastrement comprend un pignon configuré pour pouvoir être emmanché sur l'arbre de puissance. L'emmanchement du pignon sur l'arbre de turbine libre est par exemple obtenu par une liaison cannelée. Cette liaison peut, selon une variante, être verrouillée par un écrou qui solidarise le pignon sur l'arbre de puissance de la turbine libre ou qui s'oppose à tout déplacement longitudinal du pignon le long de l'arbre de puissance. Une fois le pignon emmanché et solidarisé sur l'arbre de puissance, l'ensemble formé du turbomoteur et du pignon emmanché peut être déplacé dans le boitier réducteur. Le pignon est configuré de telle sorte qu'une fois logé dans le boitier réducteur, il peut engrener la roue d'engrenage du boitier réducteur et former ainsi le pignon menant d'entrée du boitier réducteur.

Avantageusement et selon l'invention, les moyens d'encastrement réversible comprennent en outre un palier arrière de pignon, et un palier avant de pignon destinés chacun à porter l'ensemble formé dudit pignon emmanché sur ledit arbre de puissance une fois ledit arbre de puissance encastré dans ledit boitier respectivement au voisinage d'une entrée de boitier et au voisinage d'un fond de boitier longitudinalement opposé à ladite entrée de boitier, chaque palier avant et arrière comprenant en outre des éléments de roulement, une bague intérieure destinée à être centrée en appui contre le pignon et une bague extérieure destinée à être centrée en appui contre le boitier réducteur.

Selon cette variante, le kit d'encastrement comprend en outre des paliers avant et arrière du pignon destinés à porter l'extrémité de puissance de l'arbre de puissance directement dans le boitier réducteur et à en permettre sa rotation. En d'autres termes, les paliers de l'arbre de puissance font partie du kit d'encastrement et sont configurés pour être déportés dans le boitier réducteur. Ces paliers sont formés par les paliers du pignon formant le pignon menant du 1^{er} étage de réduction du boîtier réducteur, une fois l'arbre de puissance encastré sur le boitier réducteur.

Avantageusement et selon une variante de l'invention, le palier arrière dudit pignon est solidaire dudit carter, lesdits éléments de roulement et la bague intérieure dudit palier avant sont montés sur ledit arbre de puissance, et ladite bague extérieure dudit palier avant est configurée pour pouvoir être logée dans ledit boitier réducteur et solidarisée audit boitier réducteur avant l'encastrement dudit arbre de puissance dans ledit boitier réducteur.

Selon cette variante, le palier arrière du pignon menant est solidaire du carter du turbomoteur et les bagues intérieure et extérieure du palier avant sont, bien qu'appariées l'une avec l'autre, séparées l'une de l'autre : la bague intérieure et les éléments de roulement du palier avant sont montés sur l'arbre de puissance du turbomoteur, alors que la bague extérieure du palier avant est fixée sur le boitier réducteur. La bague extérieure peut par exemple être montée dans le boitier réducteur préalablement au déplacement de l'ensemble formé de l'arbre de puissance, du pignon emmanché sur l'arbre de puissance, du palier arrière, de la bague extérieure et des éléments de roulement du palier avant, solidaires du carter du turbomoteur. En d'autres termes, le palier avant est reconstitué uniquement lors de l'encastrement du turbomoteur dans le boitier réducteur. La bague intérieure vient alors se loger en regard de la bague extérieure préalablement montée dans le boîtier réducteur.

Avantageusement et selon une autre variante de l'invention, lesdits moyens d'encastrement réversible comprennent une cage porte paliers adaptée pour pouvoir être reliée solidairement audit carter du turbomoteur, ladite cage portant solidairement lesdits paliers avant et arrière dudit pignon avant, et ladite cage étant conformée pour venir en appui contre au moins deux portions de centrage ménagées dans ledit boiter réducteur.

Selon cette variante, les paliers avant et arrière du pignon sont portés par une cage porte paliers. En d'autres termes, contrairement à la variante précédente, à la fois le palier avant et le palier arrière sont solidaires du carter du turbomoteur, par le biais de la cage porte paliers. Cette cage est en outre configurée pour pouvoir coopérer avec des portions de centrage ménagées dans le boitier réducteur.

Avantageusement et selon cette variante, la cage comprend au moins un méplat radial dans lequel est ménagée une ouverture à travers laquelle peut s'étendre une portion périphérique du pignon pour assurer l'engrènement dudit pignon avec ladite roue d'engrènement du 1^{er} étage.

L'ouverture ménagée dans un méplat s'étendant radialement permet d'assurer la liaison mécanique entre le pignon du kit d'encastrement formant le pignon menant d'entrée de boitier et le pignon d'engrènement du 1^{er} étage de réduction. En outre, ce méplat permet d'éviter une interférence avec la roue du 1^{er} étage lors des opérations d'encastrement du turbomoteur dans le boitier réducteur et lors des opérations de démontage du turbomoteur du boitier réducteur.

Avantageusement et selon l'invention, le boitier réducteur est une boite à transmission de puissance. La boite de transmission de puissance est reliée au(x) rotor(s) de l'hélicoptère. Lorsque l'arbre de puissance de la turbine et la boite de transmission de puissance sont mécaniquement couplés, la puissance de l'arbre de puissance est transmise à la boite de transmission de puissance, ce qui permet d'entrainer en rotation le(s) rotor(s) de l'hélicoptère.

L'invention concerne également un hélicoptère comprenant au moins un turbomoteur selon l'invention.

L'invention concerne également un turbomoteur et un hélicoptère équipé d'un turbomoteur, caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en coupe d'un turbomoteur selon un mode de réalisation de l'invention,
- la figure 2 est une vue schématique partielle de côté d'un turbomoteur selon un mode de réalisation de l'invention,
- la figure 3 est une vue schématique partielle de côté d'un turbomoteur selon un autre mode de réalisation de l'invention,
- la figure 4 est une vue schématique en coupe d'un détail du turbomoteur selon le mode de réalisation de la figure 2,
- la figure 5 est une vue schématique en coupe d'un détail du turbomoteur selon le mode de réalisation de la figure 3,
- la figure 6 est une vue schématique en perspective d'une cage porte paliers d'un turbomoteur selon le mode de réalisation des figures 3 et 5,
- la figure 7 est une vue schématique en perspective de la cage porte paliers de la figure 6 en interaction mécanique avec une roue d'engrenage d'un 1^{er} étage de réduction d'un boitier réducteur.

### 6. Description détaillée de modes de réalisation de l'invention

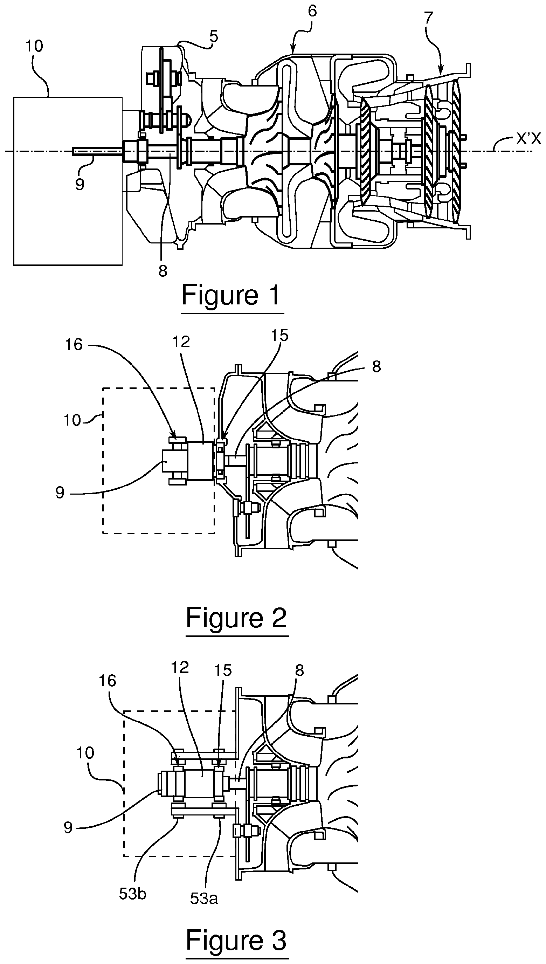

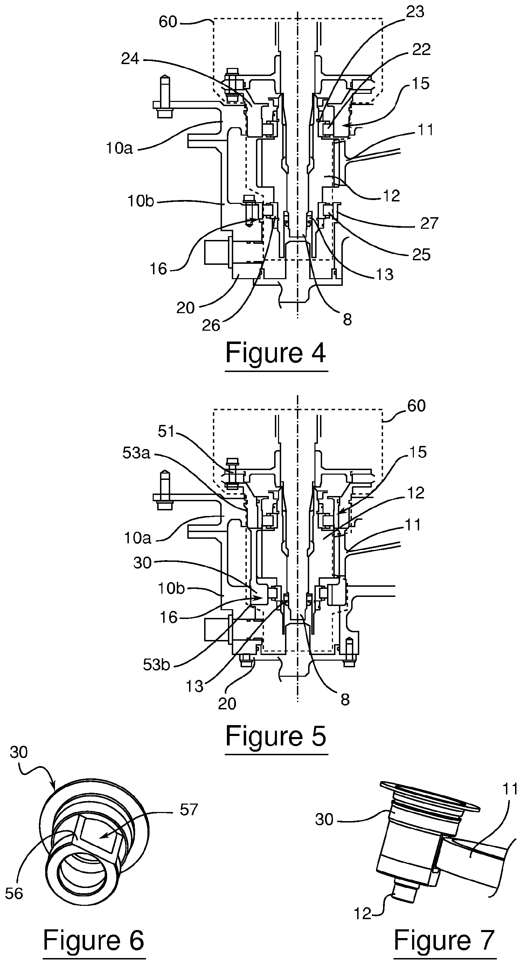

Sur les figures, les échelles et les proportions ne sont pas strictement respectées et ce, à des fins d'illustration et de clarté. Dans toute la description détaillée qui suit en référence aux figures, sauf indication contraire, chaque élément du turbomoteur est décrit tel qu'il est agencé lorsque le turbomoteur est en position de montage horizontal, encastré sur un boitier réducteur. Cet agencement est notamment représenté sur la figure 1. Par ailleurs, les termes « axial », « longitudinal », « avant » et « arrière » se rapportent à des localisations le long de l'axe central X'X du turbomoteur. Plus précisément, dans tout le texte et en lien avec les figures 1 et 3, l'avant du turbomoteur est la partie à gauche des figures alors que l'arrière est la partie à droite. En lien avec les figures 4 et 5, l'avant du turbomoteur est la partie inférieure et l'arrière est la partie supérieure. Le terme « radial » se rapporte à des localisations perpendiculaires à cet axe central. Enfin, les éléments ayant les mêmes signes de référence sur différentes figures se rapportent à des éléments identiques ou à des éléments ayant une fonction similaire.

Tel que représenté sur la figure 1, un turbomoteur selon l'invention comprend un carter 5 dans lequel sont montés un générateur de gaz 6 et une turbine libre 7. La turbine libre 7 est solidaire d'un arbre 8 de puissance. Selon le mode de réalisation des figures, l'arbre 8 de puissance qui porte la turbine libre 7 et qui permet de relier le turbomoteur à un boitier réducteur 10, passe à l'intérieur de l'arbre du générateur de gaz de sorte que l'extrémité 9 de puissance de l'arbre de puissance est du côté du générateur de gaz. Le générateur de gaz 6 et son fonctionnement ne sont pas décrits en détail et sont bien connus de l'homme du métier. L'invention s'applique bien sur également à un turbomoteur dont l'arbre de puissance ne traverse pas le générateur de gaz et dont l'extrémité de puissance est donc à l'opposée du générateur de gaz. En d'autres termes, l'invention s'applique à la fois à un montage avant ou à un montage arrière d'un turbomoteur sur un boitier réducteur.

Un turbomoteur selon l'invention comprend en outre des moyens d'encastrement réversible de l'arbre 8 de puissance dans un boitier 10 réducteur dans lequel est agencée au moins une roue 11 d'engrenage d'un 1^{er} étage de réduction. Cette roue 11 d'engrenage est représentée sur les figures 4 et 5. Il peut s'agir de tous types de roue d'engrenage comprenant une périphérie crénelée adaptée pour être entrainée en rotation par un pignon menant. Le boitier 10 réducteur comprend par exemple, et tel que représenté sur les figures 4 et 5, un carter supérieur 10a et un carter inférieur 10b solidarisés l'un à l'autre par des moyens de fixation du type vis-écrou.

Les moyens d'encastrement réversible de l'arbre 8 de puissance dans le boîtier 10 réducteur forment un kit d'encastrement. Ce kit d'encastrement est formé d'une pluralité de pièces qui sont décrites ci-après, et qui une fois assemblées les unes aux autres et/ou solidarisées soit au carter du turbomoteur, soit au boitier réducteur, permettent l'encastrement du turbomoteur dans le boitier réducteur.

Ce kit d'encastrement comprend un pignon 12 présentant un alésage central de formes et dimensions conformées et conjuguées au pourtour de l'arbre 8 de puissance. Par exemple, l'alésage central du pignon 8 est cannelé à six pans conformés au pourtour à six pans de l'arbre de puissance. Cela permet de solidariser en rotation le pignon 12 à l'arbre 8 de puissance, une fois le pignon emmanché sur l'arbre 8 de puissance. Selon le mode de réalisation des figures et tel que représenté sur les figures 3 et 4, le kit d'encastrement comprend en outre un écrou 13 monté autour de l'extrémité de l'arbre 8 de puissance pour bloquer longitudinalement le pignon 12 emmanché sur l'arbre 8 de puissance. Le pignon 12 est emmanché sur l'arbre 8 de puissance préalablement au déplacement de l'ensemble formé du pignon et de l'arbre dans le boitier 10 de réduction.

Le kit d'encastrement comprend en outre un palier 15 arrière de pignon, et un palier 16 avant de pignon. Le palier 15 arrière de pignon est agencé, une fois l'arbre 8 de puissance encastré dans le boitier 10 de réduction, au voisinage de l'entrée du boitier 10 de réduction. Le palier 16 avant de pignon est agencé, une fois l'arbre 8 de puissance encastré dans le boitier 10 de réduction, au voisinage d'un fond 20 de boitier longitudinalement opposé à l'entrée de boitier.

Le palier 15 arrière comprend des éléments 22 de roulement, une bague 23 intérieure, centrée en appui contre le pignon 12, une fois le turbomoteur encastré dans le boitier réducteur, et une bague 24 extérieure centrée en appui contre le carter supérieur 10a du boitier 10 réducteur, une fois le turbomoteur encastré dans le boitier réducteur.

Le palier 16 avant comprend des éléments 25 de roulement, une bague 26 intérieure centrée en appui contre le pignon 12, une fois le turbomoteur encastré dans le boitier réducteur, et une bague 27 extérieure centrée en appui contre le carter inférieur 10b du boitier réducteur, une fois le turbomoteur encastré dans le boitier réducteur.

Selon le mode de réalisation des figures 2 et 4, le palier 15 arrière est solidaire du carter 5 du turbomoteur et les éléments 25 de roulement et la bague 26 intérieure du palier 16 avant sont montés sur l'arbre 8 de puissance. La bague 27 extérieure du palier 16 avant est solidaire du carter 10b inférieur du boitier 10 de réduction. La bague 27 extérieure du palier 16 avant est montée et solidarisée au boitier 10 réducteur avant la descente de l'arbre 8 de puissance sur lequel le pignon 12 est emmanché et sur lequel sont montés la bague 26 intérieure et les éléments 25 de roulement du palier 16 avant. Le diamètre de la bague 27 extérieure est choisi de telle sorte qu'elle puisse passer dans un alésage du carter 10a supérieur du boitier réducteur. La largeur de la bague 27 extérieure est choisie de telle sorte qu'elle passe entre la face basse de la roue 11 d'engrenage du 1^{er} étage de réduction et la face inférieure du carter inférieur 10b du boitier réducteur pour pouvoir se loger dans le carter 10b inférieur du boitier réducteur. Selon une autre variante, la bague 27 extérieure peut être montée dans le boitier réducteur par le bas du boitier, c'est-à-dire par le carter 10b inférieur du boitier 10 réducteur. Un turbomoteur selon ce mode de réalisation permet donc son encastrement dans un boitier réducteur. Le maintien de l'arbre 8 de puissance est obtenu par la formation des paliers avant et arrière décrits en lien avec les figures 2 et 4.

Selon un autre mode de réalisation et tel que décrit en lien avec les figures 3 et 5, les moyens d'encastrement de l'arbre 8 de puissance dans le boitier réducteur comprennent une cage 30 porte paliers. Cette cage est solidarisée au carter 5 du turbomoteur, par exemple par des moyens du type vis-écrou 51. La cage 30 porte paliers porte solidairement le palier 16 avant et le palier 15 arrière du pignon 12. La cage 30 présente en outre une périphérie conformée à des portions 53a, 53b de centrage ménagées respectivement dans le carter 10a supérieur et le carter 10b inférieur du boitier 10 de réduction. Ainsi, une fois monté solidairement sur le carter 5 du turbomoteur, l'ensemble formé de l'arbre 8 de puissance et de la cage 30 peut être encastré dans le boitier réducteur et la cage vient en appui contre les portions 53a, 53b de centrage. L'arbre 8 de puissance est alors maintenu dans le boitier réducteur.

La cage 30 comprend en outre un méplat 56 radial dans lequel est ménagée une ouverture 57 permettant le passage du pignon 12 et son engrènement avec la roue 11 du 1^{er} étage de réduction. Cette liaison entre le pignon 12 et la roue 11 à travers l'ouverture 57 de la cage 30 est représentée schématiquement par la figure 7. Sur la figure 7, seule la partie inférieure du pignon 12 est visible. La partie crénelée du pignon 12 conformée à la roue 11 d'engrènement s'étend à l'intérieur de la cage 30 porte paliers.

Sur les figure 4 et 5, l'ensemble formé de l'arbre 8 de puissance, du pignon 12 emmanché sur l'arbre 8 de puissance et des éléments de paliers solidaires de l'arbre ou du carter (cage 30 pour le mode de réalisation de la figure 5 ; palier 15 arrière, élément de roulement et bague intérieure du palier avant pour le mode de réalisation de la figure 4) et qui est déplacé dans le boitier 10 réducteur pour assurer l'encastrement est délimité schématiquement par les pointillés 60.

## Revendications

1. Turbomoteur pour hélicoptère comprenant un carter (5) dans lequel est agencé un générateur (6) de gaz et une turbine (7) montée sur un arbre (8) de puissance s'étendant le long d'une direction (X'X) longitudinale, le turbomoteur comprenant des moyens d'encastrement réversible dudit arbre (8) de puissance dans un boitier (10) réducteur dans lequel est agencée au moins une roue (11) d'engrenage d'un 1er étage de réduction, lesdits moyens d'encastrement réversible comprenant un pignon (12) présentant un alésage central conformé audit arbre (8) de puissance de manière à ce que ledit pignon (12) puisse être emmanché sur ledit arbre (8) de puissance, ledit pignon (12) présentant en outre une périphérie conformée à ladite roue (11) d'engrenage du 1er étage de sorte qu'il puisse former un pignon menant d'entrée du boitier engrené dans ladite roue d'engrenage, une fois ledit arbre (8) de puissance encastré dans ledit boitier (10) réducteur, lesdits moyens d'encastrement réversible comprenant en outre un palier (15) arrière de pignon, et un palier (16) avant de pignon destinés chacun à porter l'ensemble formé dudit pignon (12) emmanché sur ledit arbre (8) de puissance une fois ledit arbre de puissance encastré dans ledit boitier (10) réducteur respectivement au voisinage d'une entrée de boitier et au voisinage d'un fond (20) de boitier longitudinalement opposé à ladite entrée de boitier, chaque palier avant (16) et arrière (15) comprenant en outre des éléments (25, 22) de roulement, une bague (26, 23) intérieure destinée à être centrée en appui contre le pignon (12) et une bague (27, 24) extérieure destinée à être centrée en appui contre le boitier (10) réducteur, **caractérisé en ce que** ledit palier (15) arrière dudit pignon (12) est solidaire dudit carter (5), lesdits éléments (25) de roulement et la bague (26) intérieure dudit palier (16) avant sont montés sur l'arbre (8) de puissance, et ladite bague (27) extérieure dudit palier (16) avant est configurée pour pouvoir être logée dans ledit boitier (10) réducteur et solidarisée audit boitier réducteur avant l'encastrement dudit arbre (8) de puissance dans ledit boitier (10) réducteur.

2. Turbomoteur pour hélicoptère comprenant un carter (5) dans lequel est agencé un générateur (6) de gaz et une turbine (7) montée sur un arbre (8) de puissance s'étendant le long d'une direction (X'X) longitudinale, le turbomoteur comprenant des moyens d'encastrement réversible dudit arbre (8) de puissance dans un boitier (10) réducteur dans lequel est agencée au moins une roue (11) d'engrenage d'un 1er étage de réduction, lesdits moyens d'encastrement réversible comprenant un pignon (12) présentant un alésage central conformé audit arbre (8) de puissance de manière à ce que ledit pignon (12) puisse être emmanché sur ledit arbre (8) de puissance, ledit pignon (12) présentant en outre une périphérie conformée à ladite roue (11) d'engrenage du 1er étage de sorte qu'il puisse former un pignon menant d'entrée du boitier engrené dans ladite roue d'engrenage, une fois ledit arbre (8) de puissance encastré dans ledit boitier (10) réducteur, lesdits moyens d'encastrement réversible comprenant en outre un palier (15) arrière de pignon, et un palier (16) avant de pignon destinés chacun à porter l'ensemble formé dudit pignon (12) emmanché sur ledit arbre (8) de puissance une fois ledit arbre de puissance encastré dans ledit boitier (10) réducteur respectivement au voisinage d'une entrée de boitier et au voisinage d'un fond (20) de boitier longitudinalement opposé à ladite entrée de boitier, chaque palier avant (16) et arrière (15) comprenant en outre des éléments (25, 22) de roulement, une bague (26, 23) intérieure destinée à être centrée en appui contre le pignon (12) et une bague (27, 24) extérieure destinée à être centrée en appui contre le boitier (10) réducteur, **caractérisé en ce que** lesdits moyens d'encastrement réversible comprennent également une cage (30) porte paliers adaptée pour pouvoir être reliée solidairement audit carter (5) du turbomoteur, ladite cage (30) portant solidairement ledit palier (16) avant et ledit palier (15) arrière dudit pignon (12) avant, et ladite cage (30) étant conformée pour venir en appui contre au moins deux portions (53a, 53b) de centrage ménagées dans ledit boitier (10) réducteur.

3. Turbomoteur pour hélicoptère selon la revendication 2, **caractérisé en ce que** ladite cage (30) comprend au moins un méplat (56) radial dans lequel est ménagée une ouverture (57) à travers laquelle peut s'étendre une portion périphérique du pignon (12) pour assurer l'engrènement dudit pignon (12) avec ladite roue (11) d'engrènement du 1er étage.

4. Turbomoteur pour hélicoptère selon l'une des revendications 1 à 3, **caractérisé en ce que** le boitier réducteur est une boite à transmission de puissance.

5. Hélicoptère comprenant au moins un turbomoteur selon l'une des revendications 1 à 4.

## Patentansprüche

1. Turbotriebwerk für einen Hubschrauber, das ein Gehäuse (5) umfasst, in dem ein Gasgenerator (6) und eine Turbine (7) angeordnet sind, die auf einer Leistungswelle (8) montiert sind, die sich in einer Längsrichtung (X'X) erstreckt, wobei das Turbotriebwerk Mittel zum reversiblen Einbau der Leistungswelle (8) in ein Untersetzungsgetriebe (10) umfasst, in dem mindestens ein Getrieberad (11) einer 1. Untersetzungsstufe angeordnet ist, wobei die Mittel zum reversiblen Einbau ein Ritzel (12) mit einer zentralen Bohrung umfassen, die an die Leistungswelle (8) angepasst ist, so dass das Ritzel (12) auf die Leistungswelle (8) aufgesteckt werden kann, wobei das Ritzel (12) weiter einen Umfang aufweist, der an das Getrieberad (11) der 1. Stufe angepasst ist, so dass es ein Eingangsritzel des Untersetzungsgetriebes bilden kann, das in das Getrieberad eingreift, sobald die Leistungswelle (8) in das Untersetzungsgetriebe (10) eingebaut ist, wobei die Mittel zum reversiblen Einbau weiter ein hinteres Ritzellager (15) und ein vorderes Ritzellager (16) umfassen, die jeweils dazu vorgesehen sind, die durch das Ritzel (12), das auf der Leistungswelle (8) aufgesteckt ist, gebildete Anordnung zu tragen, sobald die Leistungswelle in das Untersetzungsgetriebe (10) jeweils in der Nähe eines Getriebeeingangs und in der Nähe eines Getriebebodens (20), der dem Getriebeeingang in Längsrichtung gegenüberliegt, eingebaut ist, wobei jedes vordere Lager (16) und hintere Lager (15) weiter Lagerkörper (25, 22), einen Innenring (26, 23), der dazu vorgesehen ist, zentriert zu werden, um gegen das Ritzel (12) anzuliegen, und einen Außenring (27, 24) umfassen, der dazu bestimmt ist, zentriert zu werden, um gegen das Untersetzungsgetriebe (10) anzuliegen, **dadurch gekennzeichnet, dass** das hintere Lager (15) des Ritzels (12) mit dem Gehäuse (5) fest verbunden ist, die Lagerkörper (25) und der Innenring (26) des vorderen Lagers (16) auf der Leistungswelle (8) montiert sind, und der Außenring (27) des vorderen Lagers (16) konfiguriert ist, um in dem Untersetzungsgetriebe (10) untergebracht und an dem Untersetzungsgetriebe befestigt werden kann, bevor die Leistungswelle (8) in das Untersetzungsgetriebe (10) eingebaut wird.

2. Turbotriebwerk für einen Hubschrauber, das ein Gehäuse (5) umfasst, in dem ein Gasgenerator (6) und eine Turbine (7) angeordnet sind, die auf einer Leistungswelle (8) montiert sind, die sich in einer Längsrichtung (X'X) erstreckt, wobei das Turbotriebwerk Mittel zum reversiblen Einbau der Leistungswelle (8) in ein Untersetzungsgetriebe (10) umfasst, in dem mindestens ein Getrieberad (11) einer 1. Untersetzungsstufe angeordnet ist, wobei die Mittel zum reversiblen Einbau ein Ritzel (12) mit einer zentralen Bohrung umfassen, die an die Leistungswelle (8) angepasst ist, so dass das Ritzel (12) auf die Leistungswelle (8) aufgesteckt werden kann, wobei das Ritzel (12) weiter einen Umfang aufweist, der an das Getrieberad (11) der 1. Stufe angepasst ist, so dass es ein Eingangsritzel des Untersetzungsgetriebes bilden kann, das in das Getrieberad eingreift, sobald die Leistungswelle (8) in das Untersetzungsgetriebe (10) eingebaut ist, wobei die Mittel zum reversiblen Einbau weiter ein hinteres Ritzellager (15) und ein vorderes Ritzellager (16) umfassen, die jeweils dazu vorgesehen sind, die durch das Ritzel (12), das auf der Leistungswelle (8) aufgesteckt ist, gebildete Anordnung zu tragen, sobald die Leistungswelle in das Untersetzungsgetriebe (10) jeweils in der Nähe eines Getriebeeingangs und in der Nähe eines Getriebebodens (20), der dem Getriebeeingang in Längsrichtung gegenüberliegt, eingebaut ist, wobei jedes vordere Lager (16) und hintere Lager (15) weiter Lagerkörper (25, 22), einen Innenring (26, 23), der dazu vorgesehen ist, zentriert zu werden, um gegen das Ritzel (12) anzuliegen, und einen Außenring (27, 24) umfassen, der dazu vorgesehen ist, zentriert zu werden, um gegen das Untersetzungsgetriebe (10) anzuliegen, **dadurch gekennzeichnet, dass** die Mittel zum reversiblen Einbau ebenfalls einen Lager tragenden Käfig (30) umfassen, der dazu angepasst ist, fest mit dem Gehäuse (5) des Turbotriebwerks verbunden zu werden, wobei der Käfig (30) fest das vordere Lager (16) und das hintere Lager (15) des vorderen Ritzels (12) trägt und der Käfig (30) so ausgebildet ist, dass er an mindestens zwei Zentrierabschnitten (53a, 53b) anliegt, die in dem Untersetzungsgetriebe (10) vorgesehen sind.

3. Turbotriebwerk für einen Hubschrauber nach Anspruch 2, **dadurch gekennzeichnet, dass** der Käfig (30) mindestens eine radiale Abflachung (56) umfasst, in der eine Öffnung (57) vorgesehen ist, durch die sich ein Randabschnitt des Ritzels (12) erstrecken kann, um den Eingriff des Ritzels (12) mit dem Getrieberad (11) der 1. Stufe sicherzustellen.

4. Turbotriebwerk für einen Hubschrauber nach einem der Ansprüche 1 bis 3, **dadurch gekennzeichnet, dass** das Untersetzungsgetriebe ein Leistungsübertragungsgetriebe ist.

5. Hubschrauber, der mindestens ein Turbotriebwerk nach einem der Ansprüche 1 bis 4 umfasst.

## Claims

1. Turboshaft engine for a helicopter, comprising a housing (5) in which is arranged a gas generator (6) and a turbine (7) mounted on a power shaft (8) extending in a longitudinal direction (X'X), the turboshaft engine comprising means for removably embedding said power shaft (8) in a reduction gearbox (10) in which is arranged at least one gearwheel (11) of a first reduction stage, said means for removable embedding comprising a pinion (12) having a central bore adapted to said power shaft (8) in such a way that said pinion (12) can be fitted on said power shaft (8), said pinion (12) further having a periphery adapted to said gearwheel (11) of the first stage in such a way that it can form a driving input pinion of the gearbox meshed with said gearwheel, once said power shaft (8) is embedded in said reduction gearbox (10), said means for removable embedding further comprising a rear pinion bearing (15) and a front pinion bearing (16) each intended to support the assembly formed by said pinion (12) fitted on said power shaft (8) once said power shaft is embedded in said reduction gearbox (10) in the vicinity of a gearbox input and in the vicinity of a gearbox end (20) which is longitudinally opposite said gearbox input respectively, each front bearing (16) and rear bearing (15) further comprising rolling elements (25, 22), an inner ring (26, 23) intended to be centred in abutment against the pinion (12) and an outer ring (27, 24) intended to be centred in abutment against the reduction gearbox (10), **characterised in that** said rear bearing (15) of said pinion (12) is rigidly connected to said housing (5), said rolling elements (25) and the inner ring (26) of said front bearing (16) are mounted on the power shaft (8), and said outer ring (27) of said front bearing (16) is designed so as to be able to be accommodated in said reduction gearbox (10) and rigidly connected to said reduction gearbox before said power shaft (8) is embedded in said reduction gearbox (10).

2. Turboshaft engine for a helicopter comprising a housing (5) in which is arranged a gas generator (6) and a turbine (7) mounted on a power shaft (8) extending in a longitudinal direction (X'X), the turboshaft engine comprising means for removably embedding said power shaft (8) in a reduction gearbox (10) in which is arranged at least one gearwheel (11) of a first reduction stage, said means for removable embedding comprising a pinion (12) having a central bore adapted to said power shaft (8) in such a way that said pinion (12) can be fitted on said power shaft (8), said pinion (12) further having a periphery adapted to said gearwheel (11) of the first stage in such a way that it can form a driving input pinion of the gearbox meshed with said gearwheel, once said power shaft (8) is embedded in said reduction gearbox (10), said means for removable embedding further comprising a rear pinion bearing (15) and a front pinion bearing (16) each intended to support the assembly formed by said pinion (12) fitted on said power shaft (8) once said power shaft is embedded in said reduction gearbox (10) in the vicinity of a gearbox input and in the vicinity of a gearbox end (20) which is longitudinally opposite said gearbox input respectively, each front (16) and rear (15) bearing further comprising rolling elements (25, 22), an inner ring (26, 23) intended to be centred in abutment against the pinion (12), and an outer ring (27, 24) intended to be centred in abutment against the reduction gearbox (10), **characterised in that** said means for removable embedding also comprise a cage (30) for supporting bearings which is suitable for being rigidly connected to said housing (5) of the turboshaft engine, said cage (30) supporting said front bearing (16) and said rear bearing (15) of said front pinion (12) in a rigidly connected manner, and said cage (30) being adapted so as to bear against at least two centring portions (53a, 53b) provided in said reduction gearbox (10).

3. Turboshaft engine for a helicopter according to claim 2, **characterised in that** said cage (30) comprises at least one radial flat surface (56) in which an opening (57) is provided, through which a peripheral portion of the pinion (12) can extend to ensure the meshing of said pinion (12) with said gearwheel (11) of the first stage.

4. Turboshaft engine for a helicopter according to any of claims 1 to 3, **characterised in that** the reduction gearbox is a power transmission gearbox.

5. Helicopter comprising at least one turboshaft engine according to any of claims 1 to 4.
